# EUROPEAN PATENT APPLICATION

(11) **EP 1 493 512 A1**
(43) Date of publication of application: **05.01.2005**
(21) Application number: 03254236.7
(22) Date of filing: 03.07.2003
(51) Int. Cl.: B21K 1/44, C21D 8/06, F16B 35/00

(54) **High-strength stainless steel bolt and method of manufacturing the same**

(71) Applicant: Tri Techno Ltd., Chuo-ku, Tokyo 104-0033 (JP); Japan Matrix Co., Ltd., Minato-ku, Tokyo 105-0004 (JP)
(72) Inventor: Matsuki, Keisuke, Chuo-ku, Tokyo 104-0033 (JP)
(74) Representative: Haley, Stephen

(57) **Abstract**

A method of manufacturing a high-strength austenitic stainless bolt having a tensile strength of 1100 MPa or more on an industrial mass-production basis. The method of manufacturing a high-strength stainless steel bolt according to the present invention comprises the steps offorming a lubricant coating on the surface of an austenitic stainless steel wire material to obtain a lubricated wire material; cold forming the lubricated wire material within a degree-of-working range of from 0.5 to 1.5 as defined in a natural logarithmic value of the working distortion such that a head portion is bulged as a result of axial compression of the cold formed wire material and a threaded portion formed of part of the bolt material extruded under said axial compression and radially compressed; and then subjecting said threaded portion to form rolling, said lubricant coating being free from exfoliation and destruction at said degree of working range.

## Description

The present invention relates to a high-strength stainless steel bolt and, more particularly, to a method of stably manufacturing a high-strength stainless steel bolt which has a tensile strength of 1000 MPa or more as well as excellent corrosion resistance.

Conventionally, various kinds of machines, apparatuses and automotive vehicles were generally manufactured mainly using steel materials. Recently, however, weight saving is one of the requirements for higher operation speeds and energy saving. In addition, in order to enhance the durability thereof, those apparatuses and vehicles have been manufactured using stainless steel materials.

Nowadays, the manufacture of bolts used for assembling the apparatuses or the like employs steel materials having a high tensile strength and being relatively easy to work. In the apparatuses using stainless steel materials, it is also desired that the bolts to be used therefor also be made of stainless steel materials. And, with weight saving and downsizing of the apparatuses being a trend of times, there has been a tendency that bolts having an even higher level of strength is much in demand. In ISO-3506 (Specification for corrosion-resistant stainless steel fasteners) revised in 1997, as the standard of a high-strength bolt using martensitic stainless steels such as SUS 410, 420, and 431, C1-110 (min. tensile strength = 1100 MPa) was newly established.

It is to be noted that said martensitic high-strength bolt has been realized because heat treatment is possible for the purpose of strengthening. On the other hand, high-strength bolts realized by use of austenitic stainless steel materials have a relatively excellent corrosion resistance as compared to the martensitic materials but only have a tensile strength of only up to the level of 800 MPa level. Therefore, no austenitic high-strength bolt having a tensile strength higher than that level has been realized. The reason for this is that austenitic stainless steel is unable to be strengthened with thermal treatment. Therefore, there is no method of imparting a high strength to the material except by cold working at room temperature. To make the matter worse, there has not been found out yet a method of working that enables economical performance of the cold hardening working necessary for imparting a tensile strength of 1100 MPa or more to an austenitic stainless steel-made bolt.

Therefore, the present invention has been made in view of the above, and has an object to provide an austenitic stainless steel high-strength bolt that has relatively excellent corrosion resistance as compared to the conventional martensitic high-strength bolt while having a tensile strength equal to or higher than the conventional bolt, i.e. up to the level of 1100 MPa or more, and also to provide a method of manufacturing that high-strength austenitic stainless steel bolt industrially on a mass-production basis.

To attain the above object, the invention provides a method of manufacturing a high-strength stainless steel bolt, the method comprising the steps of forming a lubricant coating on the surface of an austenitic stainless steel wire material to obtain a lubricated wire material; cold forming the lubricated wire material within a degree-of-working range of from 0.5 to 1.5 as defined in a natural logarithmic value of the working distortion such that a head portion is bulged as a result of axial compression of the cold formed wire material and a threaded portion formed of part of the bolt material extruded under said axial compression and radially compressed; and then subjecting said threaded portion to form rolling, said lubricant coating being free from exfoliation and destruction at said degree of working range.

Further, there is obtained a high quality high strength stainless steel bolt by removing the lubricant coating from the surface of the material and subjecting the material to a passivation process. In the method of manufacturing a high-strength stainless bolt according to the present invention, the austenitic stainless steel material threefor is not limited in particular but the invention permits use of for example, SUS304, SUS316, SUS316L, etc. as such material, among which SUS 316 is particularly preferred.

To manufacture a high-strength bolt using a wire material made of the above-described austenitic stainless steel, it is necessary to cold form the wire material within a degree-of-working range of 0.5 to 1.5 as defined in terms of natural logarithmic value of the working distortion. Accordingly, it is first necessary to prepare a wire material having a configuration and dimension that permit the degrees of working the head portion and the threaded portion to fall within the range of 0.5 to 1.6 in accordance with the dimension of a bolt to be manufactured. If the value of the degree of working is lower than the above range, the strength of the bolt is likely to become insufficient. On the other hand, if the degree of working is higher than the above range, not only the surface precision tends to be lost but also the service life of the forming die is shortened. Therefore, both of these cases are not preferable.

The bolt is ordinarily formed of a head portion and a threaded portion. According to a known method, the head portion is formed by axially compressing the above-described wire material such that it bulges in a die to the limit while the threaded portion is formed of excluded part of the above-described material from the compressed head portion and by radially compressing the extruded part. In the present invention, it is particularly preferable to select the configuration and dimension of the wire material such that both the degree of working as measured when the head portion is formed by compressing the stainless steel material and the degree of working as measured when the threaded portion is formed by compressing, the extruded part of the material and additionally rolling the threaded portion may have values within the degree-of-working range of 0.5 to 1.5 as defined in terms of natural logarithmic value of the working distortion.

Further, the wire material selected in the above-described way is required to be coated with a lubricant on the surface thereof before it is worked. It is to be noted that the thus formed lubricant coating needs to be free from being exfoliated or broken when the degree of working is in the range of 0.5 to 1.5,. As means for forming that coating, the material therefor is not particularly limited but the invention permits suitably selecting the material conforming to the required performance from the known lubricants that are, for example, liquid lubricant such as high-pressure lubricant oil, spreadable metallic film such as zinc and lead, high polymeric film such as fluorine plastic resin and amide resin, powder such as molybdenum sulfide and graphite, or composite materials of these materials and using that.

When the austenitic stainless steel wire material having formed with the lubricant coating thereon is charged into a cold pressing die and compression load in an axial direction is applied thereto within the die such that the head portion is bulged to the limit as a result of said axial compression while the threaded portion is formed of part of the cold formed wire material simultaneously excluded under said axial compression, said excluded cold formed wire material being subjected to a radial compression in a constricted portion of the die with the result that a bolt blank member cold formed under the above-described working conditions is obtained. Since this bolt blank member has the lubricant coating remaining on its surface, it is possible to form a thread ridge by using an ordinary rolling process and to obtain a bolt. The thus obtained blank bolt member is subjected to suitable cleaning processing to thereby eliminate the lubricant coating and then to the known oxidation processing to thereby passivate the resulting bolt.

The thus manufactured high-strength bolt of the present invention is formed with substantially the same degree of working as a whole. Therefore, it has a uniformly strengthened or hardened level and hence a balanced mechanical properties. In addition, since a high reinforcing effect can be realized by effectively applying a low compression load, it is possible to prevent the forming die from experiencing fatigue failure, and, it is therefore possible to improve the bolt quality.

### [Examples]

A forming die for use for cold forming and a thread rolling die were prepared for manufacturing a hexagonal socket stainless steel bolt having a nominal diameter of 6 mm, a head portion outside diameter of 10.0 mm, a head portion height of 5.85 mm, a hexagonal socket depth of 3.5 mm, a threaded portion material diameter of 5.28 mm, a thread pitch of 1.00 mm, and a core diameter of 4.92 mm,. Also, as materials for manufacture of bolts, there were supplied SUS 316 wire materials respectively having a diameter of 5.8 mm, a diameter of 7.2 mm and a diameter of 9.1 mm. And, soft-metallic coating containing therein powder lubricant was applied to the respective wire materials and, by using the above-described forming die, the resulting wire material was cold pressure formed. During the forming process, compressing of the head portions of the bolts in the axial direction within the die and part of the wire material extruded into a constricted portion of the die to form the threaded portions was performed, and, then, further, the threaded portions were subjected to rolling. Following these procedures, three kinds of bolts A, B and C were obtained.

For the purpose of comparison, the above-described wire material having a diameter of 7.2 mm was coated with water paint containing therein solid powder lubricant conventionally used for rolling of the thread, and then cold pressure forming was performed in the same way as described above, thereby to obtain a bolt D.

Each of these bolts A, B, C, and D was repeatedly subjected to forming by using a forming die having the same property. Determination was made of the average forming stress value (MPa) of each bolt, the average degrees of working calculated from the amounts of working distortion of the pressure formed and thread-rolled head portion and threaded portion thereof, the average tensile strength (MPa) as measured regarding each bolt product, and the number of bolts that could be formed by the time when the forming die was broken. The results are shown in Table 1 below

**[Table 1]**

| Forming Conditions and Properties of the Bolts | | | | |
|---|---|---|---|---|
| symbol of the bolt | A | B | C | D |
| wire diameter (mm) | 5.8 | 7.2 | 9.1 | 7.2 |
| lubricant coating | soft metal | soft metal | soft metal | powder coating |
| forming stress value (MPa) | 1700 | 1400 | 1900 | 1400 |
| degree of forward extrusion working | 0.22 | 0.66 | 1.13 | 0.66 |
| degree of rolling working of the thread | 0.19 | 0.19 | 0.19 | 0.19 |
| overall degree of working of the threaded portion | 0.41 | 0.85 | 1.32 | 0.85 |
| degree of backward extrusion working | 0.08 | 0.08 | 0.08 | 0.08 |
| degree of swaging working of the head portion | 0.71 | 0.71 | 0.25 | 0.71 |
| overall degree of working of the head portion | 0.79 | 0.79 | 0.33 | 0.79 |
| Tensile strength (MPa) | 1000 | 1400 | 1850 | 1400 |
| number of bolts formed | 60×10³ | 50×10³ | 5×10³ | 3×10³ |

Judging from the results shown in Table 1, the bolt B is uniformly strengthened and has balanced mechanical properties. The durable service life of the forming die was found to be excellent and, for this reason as well, the bolt B has been found to be a preferable product because the mass production thereof is possible. In contrast, the strength of bolt A is insufficient at the threaded portion although strengthened mainly at the head portion and its neighboring area. The bolt C has unbalanced mechanical properties because of its insufficiency in the strength of the head portion although it is sufficient in the strength of the threaded portion. In correspondence thereto, the bolts A and C have non-uniform or inbalanced mechanical properties. For the bolt D, it is seen that the compressive load at the time of its formation is so high as to shorten the service life of the die, thus making the mass-production thereof difficult.

According to the method of manufacturing a high-strength stainless steel bolt, the bolts made of austenitic stainless steel having a tensile strength of 1100 MPa or more and balanced mechanical properties can be formed with a relatively low compressive load. Therefore, the high-strength bolts having excellent corrosion resistance characteristic of austenitic stainless steel can be manufactured without applying an excessively high level of load to the forming die. As a result, it is possible to extend the service life of the forming die and to economically mass-produce a high quality stainless steel bolts having uniform performance.

## Claims

1. A method of manufacturing a high-strength stainless steel bolt, comprising the steps of forming a lubricant coating on the surface of an austenitic stainless steel wire material to obtain a lubricated wire material; cold forming the lubricated wire material within a degree-of-working range of from 0.5 to 1.5 as defined in a natural logarithmic value of the working distortion such that a head portion is bulged as a result of axial compression of the cold formed wire material and a threaded portion formed of part of the bolt material extruded under said axial compression and radially compressed; and then subjecting said threaded portion to form rolling, said lubricant coating being free from exfoliation and destruction at said degree of working range.

2. A method of manufacturing a high-strength stainless bolt according to claim 1, further comprising the steps of removing the lubricant coating from the surface of the material and subjecting said material to a passivation processing.

3. A high-strength stainless bolt, comprising a surface thereof that is formed of the passivated austenitic stainless steel having a tensile strength of at least 1100 MPa.
